# EUROPEAN PATENT SPECIFICATION

(11) **EP 0 530 152 B1**
(45) Date of publication and mention of the grant of the patent: **26.10.1994**
(21) Application number: 92830198.5
(22) Date of filing: 27.04.1992
(51) Int. Cl.: C04B 33/13

(54) **A process for the manufacture of antistatic ceramic tiles with low water absorption**
Verfahren zur Herstellung antistatischer keramischer Fliesen mit geringem Absorptionsvermögen für Wasser
Procédé de préparation de carreaux céramiques antistatiques à faible absorption d'eau

(30) Priority: 23.08.1991 IT FE910010; 04.11.1991 IT FE910019
(43) Date of publication of application: 03.03.1993
(73) Proprietor: COOPCOSTRUTTORI, Società Cooperativa a Responsabilità Limitata, I-44011 Argenta (Ferrara) (IT)
(72) Inventor: Alberici, Paolo, I-40062 Molinella (Bologna) (IT); Simioli, Luca Matteo, I-40068 San Lazzaro di Savena (Bologna) (IT)
(74) Representative: Lanzoni, Luciano

(56) References cited:
- BE-A- 790 349
- PATENT ABSTRACTS OF JAPAN vol. 14, no. 024 18 January 1990 & JP-A-12 64 950 (NIPPON MINING CO.LTD.) 23 October 1989.
- PATENT ABSTRACTS OF JAPAN vol. 15, no. 133 2 April 1991 & JP-A-30 16 981 (JAPAN EXLAN CO.LTD.) 24 Januari 1991.

## Description

The present invention relates to a process for the manufacture of antistatic ceramic tiles with low water absorption.

More exactly, the invention relates to a method of embodying ceramic tiles that allow the controlled conduction of an electrical charge. Such tiles are instrumental in the realization of antistatic type flooring, i.e. guaranteed free of electrostatic effects as specified for environments and rooms with special requirements regarding the dispersion of electrical charges, in compliance with national and international standards. Antistatic tiles can therefore be utilized to advantage in laying floors for operating theatres, banking and accounting centres, laboratories, factory premises and other areas typified by the use of sensitive electronic equipment such as computers and the like.

The electrostatic charges that tend to build up on floors due to a variety of causes, for example such as mechanical rubbing action, can lead ultimately to interference with the operation of equipment in environments such as those mentioned above, and in particular to a risk of explosion, should there be volatile materials present. In addition, the minor electrical discharges which occur can be a source of physiological annoyance, given the discomfort occasioned by the passage of an electric shock, however small, through the human body.

It is evident from the foregoing that control over the electrical resistance of a floor (hence of the component tiles) and by extension, control over the rate at which electrostatic charges are built up on the exposed surface, has in recent times become a fundamental prerequisite for certain applications. Before entering into any detailed discussion of the manner in which tiles with antistatic properties are produced, it will be useful to recall certain basic concepts regarding the conductance and the antistatic characteristics of floors generally. The electrical conductance of a material reflects the extent to which an electric current can be passed through it; electrical resistance is the inverse of conductance, and reflects the extent to which the same material naturally impedes the passage of an electrical charge.

As already outlined, the electrical resistance of a floor is important from the standpoint of safety, especially as regards the risk of fulguration, and must be sufficiently high to obviate any such risk. Another important characteristic of a floor, also stemming from electrical conductance, is the extent to which electrostatic charges are allowed to build up on the exposed surface; the property of being antistatic, which occurs generally in combination with low, but not ultra low values of conductance, allows certain materials to inhibit the build-up of static electricity.

Whilst it is possible currently to purchase special ceramic tiles for antistatic flooring, of which the conductivity (specific conductance) is established by the amount of water that can be absorbed by the material used in fashioning the ceramic body, the high porosity of such materials, intended to allow a significant absorption of water, tends to result in a distinct lack of structural compactness.

Moreover, the manufacture of "conductive" ceramic tiles with water absorption of less than 2% is not permitted; consequently, a floor laid with tiles of this type will readily accumulate dirt and afford limited guarantees of cleanliness and hygiene.

Another type of ceramic tile features a layer of conductive glaze applied to the exposed surface and along the edges. In this instance conductivity is ensured exclusively by a glaze difficult in any event to apply and affording scant resistance both to abrasion (Mohs hardness) and to chemical attack: similarly, areas of the glaze defaced by scratching betray a markedly lower resistance to staning than those which remain unaffected.

Such a type of static electricity conducting glazes are disclosed in the Belgian Patent BE-A-790349 (SOLVAY ET CIE). The glazes, having a surface resistance of 10^2-10^7 ohms per square, are made by fusing a mixture of tin and/or tin derivative, antimony derivative, lead oxide and element from groups Ib-VIIIb and VIII of the periodic classification and their derivative. The mixture and a known flux may be applied to the upper face of ceramic tiles which are the fired, or the coating may be preformed by known methods e.g. plasma projection or projection by a flexible band, so as to cover non-conductive wall surfaces.

Whilst other nominally "conductive" materials are manufactured as flooring or floor-coverings, which consist typically in discrete pieces or continuous sheets of rubber of plastics affording the required conductivity, these offer mediocre performance and inferior resistance to tie chemical, physical and mechanical stresses mentioned above, being easily cut and torn, significantly transformed by heat and flames, and relatively limited in their capacity to withstand abrasion.

Accordingly, the object of the present invention is to overcome the aforementioned drawbacks through the provision of antistatic tiles suitable for all the applications outlined above and affording good levels of controlled electrical conductivity in conjunction with low water absorption.

The stated object is realized in a process for the manufacture of antistatic ceramic tiles with low water absorption as characterized in the appended claims, which comprises the step, effected prior to and separately from the operation of batching the raw materials used for the ceramic body, of mixing together at least two compounds with properties of relative electrical conductivity, whereupon the blend thus obtained is ground and added to the raw materials; according to the present invention, the compounds with properties of relative electrical conductivity consist in metal oxides, of which one is an oxide of antimony.

A detailed description of the present invention is preceded by a summary of the operations involved in manufacturing ceramic tiles. The traditional method of making ceramic tiles with low water absorption essentially comprises the steps of:
- batching raw materials including clays, silica sands and feldspathic sands in such a way as to obtain a homogeneous composition of argillaceous and non argillaceous ingredients of suitable and at all events relatively fine particle distribution;
- wet-grinding (in water) and thoroughly blending the raw materials to obtain a suspension, or "slip" in which the water content is controlled;
- atomizing the slip and drying the particles in a counter flow of hot air so as to obtain granules.

This last step consists in effect of injecting the slip at high pressure into a spray dryer, where it becomes atomized and exposed to hot air supplied by special heaters. The process that occurs internally of the spray dryer is therefore one of evaporation, the water being eliminated to leave substantially round granules of the required moisture content and particle size distribution. The granules are then pressed, and if necessary dried further, to obtain a tile body which when fired will be invested with the mechanical properties required for different uses; further finishing steps may follow.

The raw materials favoured, to the end of obtaining a ceramic end-product with the requisite chemical and physical properties, are MG8860 and ZETTLITZ kaolin (argillaceous) and FELDSPAR F7 and nepheline (non argillaceous).

According to the present invention, a process for the manufacture of antistatic ceramic tiles with low water absorption comprises the step, effected separately from and prior to the step of batching the raw materials required for the ceramic body, of mixing together and grinding at least two compounds characterized by the property of being electrically conductive to a degree, in relation to the batched raw materials. Thereafter, the blended and ground compounds are admixed to the raw materials.

More exactly, the two compounds possessing relative electrical conductivity are metal oxides, and in particular, one of the two compounds is an oxide of antimony.

Naturally, subsequent steps of the manufacturing process through to realization of the end product remain unchanged.

The option exists of calcining the two (at least) blended conductive compounds, at a temperature of not less than 1200 °C, before their addition to the raw materials.

The electrical conductivity of the metal oxides in question is qualified as "relative" by reason of the fact that, notwithstanding these are oxides classifiable individually and by association with their source metal as being insulating oxides, a degree of electrical conductivity is nonetheless discernible in comparison to the slip obtained by grinding and homogenizing the argillaceous and non argillaceous raw materials, which by contrast has the properties of a genuine electrical insulator. To advantage, metal oxides suitable for the purpose can be selected from those compounds characterized by an absolute capacity for chemical and physical homogenization with the ingredients of the ceramic body, in particular, the oxides of antimony, tin, iron, copper, zinc, silver, aluminium and lead.

A preferred blend of compounds possessing relative electrical conductivity would consist in 85% tin oxide and 15% antimony oxide.

The effective proportion of the blended tin and antimony oxides admixed to the raw materials will be at least 5% of the raw materials themselves, and in particular, advantageous batch proportions are 75% raw materials with 25% oxides, or alternatively 70% raw materials with 30% oxides, or alternatively 65% raw materials with 35% oxides, according to the particular requirements.

In particular, among the oxides of antimony, tin and iron, the following are preferred: antimony oxide Sb₂O₃, tin oxide SnO₂, ferrous oxide Fe₂O₃. Accordingly, when the blended metal oxide compounds are added to the previously batched argillaceous and non-argillaceous raw materials, the insulating properties of the latter will be modified through the introduction of a relative degree of electrical conductivity with the result that the ceramic body is invested with the properties of a semiconductor, thereby allowing the dispersion of electrostatic charges which normally will be directed to earth by way of a copper conductor.

## Claims

1. A process for the manufacture of antistatic ceramic tiles with low water absorption,
characterized
- in that it comprises the steps, effected prior to and separately from the operation of batching the raw materials required for the ceramic body of the tile, of mixing together at least two compounds affording properties of electrical conductivity in relation to the raw materials, and then grinding the blend of compounds thus obtained, whereupon the compounds are admixed to the raw materials before proceeding with the remaining operations of the manufacturing process through to realization of the end-product; and
- in that the compounds with properties of relative electrical conductivity consist in metal oxides, of which one is an oxide of antimony.

2. A process as in claim 1, comprising the further step, effected following the step of grinding the blended compounds, of:
- calcining the ground compounds at a temperature not less than 1200 °C;
whereupon the calcined substance is added to the raw materials before proceeding with the remaining operations of the manufacturing process through to realization of the end-product.

3. A process as in claim 1, wherein the metal oxides are selected from antimony oxide, tin oxide, iron oxide, copper oxide, zinc oxide, silver oxide, aluminium oxide and lead oxide.

4. A process as in claim 1, wherein the blend of compounds with properties of relative electrical conductivity consists in 85% tin oxide and 15% antimony oxide.

5. A process as in claim 1, wherein the blend of compounds with properties of relative electrical conductivity consists in tin oxide and antimony oxide mixed together and added to the raw materials in a proportion not less than 5% of the batched raw materials.

6. A process as in claim 1, wherein the blend of compounds with properties of relative electrical conductivity is added to the raw materials at a rate commensurate with batch proportions of 75% raw materials and 25% conductive compounds.

7. A process as in claim 1, wherein the blend of compounds with properties of relative electrical conductivity is added to the raw materials at a rate commensurate with batch proportions of 70% raw materials and 30% conductive compounds.

8. A process as in claim 1, wherein the blend of compounds with properties of relative electrical conductivity is added to the raw materials at a rate commensurate with batch proportions of 65% raw materials and 35% conductive compounds.

9. A process as in claim 1, wherein the metal oxides are selected from antimony oxide Sb₂O₃, tin oxide SnO₂, iron oxide Fe₂O₃, copper oxide, zinc oxide, silver oxide, aluminium oxide and lead oxide.

## Patentansprüche

1. Ein Verfahren zur Erzeugung von antistatischen keramischen Fliesen mit geringem Absorptionsvermögen für Wasser, dadurch gekennzeichet, daß es vor der Phase des Beschickens mit dem zur Bildung des Keramikträgers der Fliese erforderlichen Rohstoff und davon unabhängig die folgenden Schritte aufweist: Die Vermischung von zumindest zwei Komponenten mit der Eigenschaft der relativen elektrischen Leitfähigkeit mit Bezug auf die Rohstoffe; die Vermahlung der so erzielten Mischung; die Vermischung der Komponenten mit dem Rohstoff vor den verbleibenden Arbeitsgängen zur Fertigung des Endproduktes; und
dadurch, daß die Komponenten mit der Eigenschaft der relativen elektrischen Leitfähigkeit aus Metalloxyden bestehen, von denen eins ein Antimonoxyd ist.

2. Ein Verfahren gemäß Anspruch 1), das einen weiteren Schritt aufweist, der nach dem Vermahlen der Komponenten erfolgt:
- Brennen der Grundkomponenten bei einer Temperatur von nicht unter 1200°C;
danach werden die gebrannten Substanzen vor den verbleibenden Arbeitsgängen zur Fertigung des Endproduktes den Rohstoffen hinzugefügt.

3. Ein Verfahren gemäß dem Anspruch 1), bei dem die Metalloxyde aus Antimonoxyd, Zinnoxyd, Eisenoxyd. Kupferoxyd, Zinkoxyd, Silberoxyd, Aluminiumoxyd und Bleioxyd gewählt werden.

4. Ein Verfahren gemäß dem Anspruch 1), bei dem die Mischung der Komponenten mit der Eigenschaft der relativen elektrischen Leitfähigkeit zu 85% aus Zinnoxyd und zu 15% aus Antimonoxyd besteht.

5. Eine Verfahren gemäß dem Anspruch 1), bei dem die Mischung der Komponenten mit der Eigenschaft der relativen elektrischen Leitfähigkeit aus vermischtem Zinnoxyd und Antimonoxyd besteht und den Rohstoffen in einem Prozentsatz von nicht unter 5% hinzugefügt wird.

6. Ein Verfahren gemäß dem Anspruch 1), bei dem die Mischung der Komponenten mit der Eigenschaft der relativen elektrischen Leitfähigkeit den Rohstoffen in einem Verhältnis von 75% Rohstoffen und 25% leitenden Komponenten hinzugefügt werden.

7. Ein Verfahren gemäß dem Anspruch 1), bei dem die Mischung der Komponenten mit der Eigenschaft der relativen elektrischen Leitfähigkeit den Rohstoffen in einem Verhältnis von 70% Rohstoffen und 30% leitenden Komponenten hinzugefügt werden.

8. Ein Verfahren gemäß dem Anspruch 1), bei dem die Mischung der Komponenten mit der Eigenschaft der relativen elektrischen Leitfähigkeit den Rohstoffen in einem Verhältnis von 65% Rohstoffen und 35% leitenden Komponenten hinzugefügt werden.

9. Ein Verfahren gemäß dem Anspruch 1), bei dem die Metalloxyde aus Antimonoxyd Sb2O3, Zinnoxyd SnO2, Eisenoxyd Fe2O3, Kupferoxyd, Zinkoxyd, Silberoxyd, Aluminiumoxyd und Bleioxyd ausgewählt werden.

## Revendications

1. Un procédé pour la préparation de carreaux céramiques antistatiques à faible absorption d'eau,
caractérisé
- en ce fait qu'il comprend des phases, effectuées séparément et avant de charger les matières premières nécessaires pour le corps céramique du carreau, qui consistent à mélanger ensemble au moins deux corps composés qui fournissent des propriétés de conductivité par rapport aux matières premières, et ensuite de broyer le mélange des corps composés ainsi obtenu, ce après quoi on mélange les corps composés aux matières premières avant de procéder au reste des opérations du procédé de préparation directement pour réaliser le produit fini; et
- en ce fait que les composés ayant des propriétés de conductivité électrique relative consistent en oxydes de métal, dont l'un est un oxyde d'antimoine.

2. Un procédé comme celui de la revendication 1, qui comprend une autre phase, effectuée à la suite de de la phase de broyage des corps composés mélangés, qui consiste à:
- fritter la masse des corps composés à une température non inférieure à 1200°c;
ce après quoi on ajoute la substance frittée à la matière première avant de procéder au reste des opérations du procédé de préparation pour la réalisation du produit fini.

3. Un procédé comme celui de la revendication 1, suivant lequel les oxydes de métal sont choisis parmi l'oxyde d'antimoine, l'oxyde d'étain, l'oxyde de fer, l'oxyde de cuivre, l'oxyde de zinc, l'oxyde d'argent, l'oxyde d'aluminium et l'oxyde de plomb.

4. Un procédé comme celui de la revendication 1, suivant lequel le mélange de corps composés ayant des propriétés de conductivité électrique relative consiste en 85% d'oxyde d'étain et 15% d'oxyde d'antimoine.

5. Un procédé comme celui de la revendication 1, suivant lequel le mélange des corps composés ayant des propriétés de conductivité électrique relative consiste en oxyde d'étain et en oxyde d'antimoine mélangés ensemble et ajoutés aux matières premières en une proportion non inférieure à 5% des matières premières chargées.

6. Un procédé comme celui de la revendication 1, suivait lequel le mélange de corps composés ayant des propriétés de conductivité électrique est ajouté aux matières premières suivant l'importance de la charge composée de 75% de matières premières et de 25% de corps composés conducteurs.

7. Un procédé comme celui de la revendication 1, suivant lequel le mélange de corps composés ayant des propriétés de conductivité électrique relative est ajouté aux matières premières suivant l'importance de la charge composée de 70% de matières premières et de 30% de corps composés conducteurs.

8. Un procédé comme celui de la revendication 1, suivait lequel le mélange des corps composés ayant des propriétés de conductivité électrique relative est ajouté aux matières premières suivant l'importance de la charge composée de 65% de matières premières et 35% de corps composés conducteurs.

9. Un procédé comme celui de la revendication 1, suivant lequel les oxydes de métal sont choisis parmi l'oxyde d'antimoine Sb2O3, l'oxyde d'étain Sno2, l'oxyde de fer Fe2O3, l'oxyde de cuivre, l'oxyde de zinc, l'oxyde d'argent, l'oxyde d'aluminium et l'oxyde de plomb.
